(19) Europäisches Patentamt
European Patent Office
Office européen des brevets

(11) EP 0 941 746 A2

(12) EUROPÄISCHE PATENTANMELDUNG

(43) Veröffentlichungstag: **15.09.1999 Patentblatt 1999/37**

(51) Int Cl.6: **A63B 22/02**

(21) Anmeldenummer: **99104838.0**

(22) Anmeldetag: **11.03.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **13.03.1998 DE 19810914**

(71) Anmelder:
- **Coen, Günther, Dr.
40627 Düsseldorf (DE)**
- **Luhn, Ernst
42781 Haan (DE)**
- **Oberhoff, Dietmar
42799 Leichlingen (DE)**

(72) Erfinder:
- **Coen, Günther, Dr.
40627 Düsseldorf (DE)**
- **Luhn, Ernst
42781 Haan (DE)**
- **Oberhoff, Dietmar
42799 Leichlingen (DE)**

(74) Vertreter: **König, Reimar, Dr.-Ing. et al
Patentanwälte Dr.-Ing. Reimar König
Dipl.-Ing. Klaus Bergen
Dipl.-Biol. Gregor König,
Wilhelm-Tell-Strasse 14
40219 Düsseldorf (DE)**

# (54) Geregeltes Laufgerät

(57) Die Erfindung betrifft ein angetriebenes Laufgerät mit einem Enffernungsmeßsystem und einem Regelungssystem für die Laufgeschwindigkeit des Bandes in Abhängigkeit von der Position des Läufers, bei dem eine Erhöhung der Meßwiederholrate dadurch erreicht wird, daß schmalbandig verschiedene Sende- und Empfangsfrequenzen nacheinander verwendet werden und die Schwelle für die Signaldetektion laufzeitabhängig geändert wird.

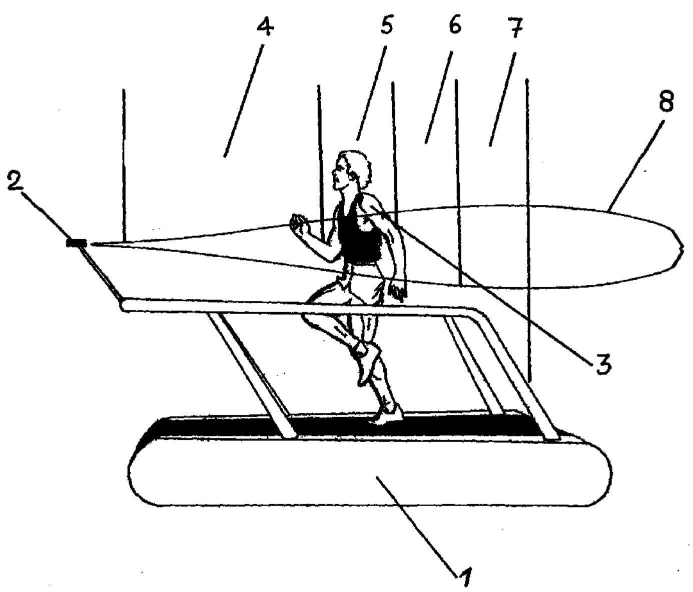


FIG 1



Printed by Jouve, 75001 PARIS (FR)

## Beschreibung

Die Erfindung betrifft ein Bewegungsgerät, insbesondere ein angetriebenes Laufgerät mit einem Enffernungsmeßsystem und einem Regelungssystem für die Antriebsgeschwindigkeit in Abhängigkeit von der Position des Benutzers.

Derartige Geräte werden vom Fitness- bis zum Hochleistungssportbereich sowie für ergonomische Messungen und in Rehabilitationskliniken eingesetzt. Es handelt sich beispielsweise bei Laufgeräten meist um eine Plattform, die in der einfachsten Ausführung lediglich ein umlaufendes gebremstes Band und ein Haltegeländer aufweist. Der Trainingseffekt wird dadurch erzielt, daß der Sportler sich am Haltegeländer festhält und durch seine eigene Laufleistung das Band in Bewegung hält. Dies führt jedoch zu einer äußerst unnatürlichen Laufbewegung, da der Läufer die Arme nicht - wie beim natürlichen Lauf - frei rhythmisch einsetzen kann.

Diesen Nachteil vermeiden solche angetriebenen Laufbänder, bei denen das umlaufende Endlosband beispielsweise mittels eines Elektromotors in Bewegung gehalten wird, wobei der Läufer, um seine Position auf dem Laufband zu halten, eine Laufbewegung ausführen muß. Dabei lassen sich verschiedene Geschwindigkeiten vorwählen, wobei im einfachsten Falle die Geschwindigkeit des Laufbandes mit einer vorgegebenen Beschleunigung auf eine vorgegebene Geschwindigkeit hochgefahren wird.

Bei einigen Laufbandtypen läßt sich im Programmablauf eine Steigung des Bandes relativ zur Horizontalen eingeben. In allen Fällen ist jedoch die Endgeschwindigkeit des Laufbandes konstant, so daß sich der Läufer der einmal gewählten Geschwindigkeit unterwerfen muß, und seine Geschwindigkeit nicht, wie beim natürlichen Laufen, während des Laufens seinen Bedürfnissen anpassen kann.

Es ist versucht worden, dieser Schwäche der genannten Laufbänder mit verschiedenartigen Schaltern und Schaltungen entgegenzuwirken. So wurden Laufbänder entwickelt, deren Geschwindigkeit sich über eine kleine Taste während des Laufens inkrementell verändern läßt. Dies erlaubt es zwar die Belastungssituation während des Laufens den eigenen Bedürfnissen anzupassen, doch hat sich herausgestellt, daß das Laufen, insbesondere an der Leistungsgrenze des Läufers, eine erhebliche Konzentration erfordert, die durch den erforderlichen Schalter-Betätigungsvorgang unabhängig von der Schalterart stark behindert wird. Dies wird insbesondere im Leistungssportbereich als störend empfunden, so daß Laufbänder bisher keine ernsthafte Trainigs-Alternative zum natürlichen Laufen darstellen.

Selbst bei aufwendigen Laufgeräten, bei denen die Schalterfunktion durch einen akustischen Schalter ausgeübt wird, so daß bereits ein Zuruf des Athleten zur Änderung der Bandlaufgeschwindigkeit führt, wird die Steuerungshandlung als störend empfunden.

Ferner ist es bisher nicht gelungen, ein Laufband zu entwickeln, welches nicht nur eine Änderung der Laufgeschwindigkeit erlaubt, sondern auch den beim natürlichen Laufen vorkommenden extremen Geschwindigkeitsänderungen gewachsen ist, wie dies beispielsweise bei Sprints der Fall ist.

In der US-Patentschrift 5 314 391 ist ein Laufband beschrieben, mit dem versucht wurde, die Konzentrationsbeeinträchtigung des Läufers dadurch zu vermeiden, daß ein Entfernungsmeßsystem die Position des Läufers bestimmt und den Antrieb des Laufbandes entsprechend regelt. Das Enffernungsmeßsystem besitzt einen elektroakustischen Ultraschallwandler, der einen Ultraschallimpuls aussendet und dessen Laufzeit bis zum ersten Körper ermittelt, der den Ultraschall reflektiert. Durch Halbieren der Laufzeit läßt sich der Abstand des Körpers mit der bekannten Geschwindigkeit des Schalls in Luft ermitteln.

Für eine funktionierende Regelung eines Laufbandantriebs in Abhängigkeit von der Position des Läufers ist jedoch ausschließlich die Position des Torsos des Läufers von Bedeutung. In der Praxis bewirkt der laufende Athlet durch das Bewegen seiner Arme und Beine eine Ermittlung fehlerhafter Werte anstelle seiner tatsächlichen Position durch den Entfernungsmesser. Dies führt dann beispielsweise dazu, daß der Laufbandantrieb stark beschleunigt wird, wenn der Athlet seinen Arm bei konstanter Laufgeschwindigkeit vorwärts bewegt, wie dies beim natürlichen Laufen der Fall ist. Folglich ist das beschriebene Laufband nur sehr begrenzt einsatzfähig und birgt insbesondere ein hohes Fehlsteuerungsrisiko in sich, welches zum Sturz des Läufers bei plötzlichem Beschleunigen oder Abbremsen des Laufbandes, ohne daß der Läufer seine Laufgeschwindigkeit geändert hat, führen kann.

Ein weiteres Problem besteht darin, daß, um die Position des Läufers mit ausreichender Exaktheit zu bestimmen, eine bestimmte Mindestwiederholrate der Ultraschallmessung erforderlich ist. Dem bekannten Ultraschallentfernungsmeßsystem ist der Nachteil zu eigen, daß die Wiederholrate nicht in der gewünschten Weise erhöht werden kann, da zwischen den einzelnen Messungen zunächst das Abklingen des Schalls der vorherigen Messung abgewartet werden muß. Wird die Wartezeit zwischen den Messungen über ein bestimmtes Maß hinaus verringert, führen Reflexionskörper außerhalb des direkten Meßbereichs zu Fehlmessungen, da die Laufzeit der Schallwelle eines ersten Schallimpulses ein Meßsignal im Meßfenster der nächsten Messung erzeugt.

Der Erfindung liegt das Problem zugrunde, ein die natürliche Fortbewegungssituation, beispielsweise eines Läufers, simulierendes angetriebenes Bewegungsgerät zu schaffen.

Das Problem wird gelöst durch ein Laufgerät mit den Merkmalen der nebengeordneten Ansprüche.

Im einzelnen liegt der Erfindung der Gedanke zugrunde, die Auswertung der Echofolgen auf einen bestimmten Erwartungsbereich (Meßfenster) zu beschränken. Das Meßfenster kann durch das erste eintreffende Signal eröffnet werden und den physiologischen Parametern des Benutzers angepaßt werden. Dabei können die Reflexionen der stark bewegten Körperteile (z.B. Arme) von den nahezu ruhenden Körperteilen (z.B. Torso) getrennt werden. Durch einen Vergleich der einzelnen Echosequenzen (Scan zu Scan Vergleich) läßt sich in kleinen Zeitintervallen ein konstanter Anteil identifizieren, der dem ruhenden Körperteil (z.B. Torso) entspricht. Die stark variierenden Echosignale, die zeitweise vor und zeitweise nach dem konstanten Anteil detektiert werden, stellen die Signale der Arme und Beine dar und können eliminiert werden (Fig. 1), indem die relativ zwischen den Einzelmessungen nicht koinzidierenden Signale herausgefiltert und die verbleibenden koinzidierenden Signale verwendet werden.

Mit Hilfe dieses Differenzierungsverfahrens läßt sich die mittlere Laufposition des Läufers bestimmen und für die Regelung des Laufbandes verwerten.

Ferner liegt der Erfindung der Gedanke zugrunde eine Erhöhung der Meßwiederholrate dadurch zu ermöglichen, daß das Sende- und Empfangssystem schmalbandig ausgelegt ist und die Sende- und Empfangsfrequenz in aufeinanderfolgenden Meßzyklen geändert wird. Hierbei kann die Bandbreite des Sensors auf verschiedene Sende- und Empfangsfrequenzen aufgeteilt werden.

So kann das Ultraschallfrequenzsystem bei einem Arbeitsbereich beispielsweise zwischen 46 und 53 kHz und einer Sende- und Empfangsbandbreite von beispielsweise je 1 kHz so betrieben werden, daß die Frequenzdifferenz zwischen zeitlich benachbarten Messungen möglichst groß ist und z.B. bei den geradzahlig indizierten Messungen (d.h. beispielsweise Messung 2,4 und 6) um 4 kHz erhöht und bei ungeraden Messungen (d.h. beispielsweise Messung 1,3,5) um 4 kHz gesenkt wird, bis der Frequenzbereich ausgeschöpft ist, um dann wieder mit der Ausgangsfrequenz zu beginnen. Hiermit kann eine Wiederholrate von 80 Hz erreicht werden, während herkömmliche Geräte eine maximale Wiederholrate von 16 Hz erreichen. Der verwendete Frequenzbereich läßt sich vorzugsweise am Laufgerät einstellen, so daß er den konkreten Gegebenheiten angepaßt werden kann. So lassen sich mehrere Ultraschalllaufgeräte nebeneinander betreiben, ohne daß eine gegenseitige Störung auftritt, indem diese mit verschiedenen Frequenzen betrieben werden.

Bei einer bevorzugten Ausführungsform wird die Schwelle für die Signaldetektion laufzeitabhängig geändert. Da der Bereich, in dem sich der Benutzer befinden kann, durch die Geometrie des Laufgerätes vorgegeben ist und daher bei der Einstellung des Ultraschallmeßgerätes berücksichtigt werden kann, läßt sich die Schwelle der Signaldetektion über die Zeit so einstellen, daß nach Aussenden und Empfangen der gewünschten Meßsignale unmittelbar die nächste Messung erfolgt.

Bei bekannten Ultraschallmeßgeräten werden die Signale der zweiten Messung durch die später eintreffenden Signale der ersten Messung, die von weiter entfernten Gegenständen reflektiert werden, gestört und führen zu Meßfehlern, wenn die Abklingzeit zu kurz ist. Bei der erfindungsgemäßen Lösung ist der Verlauf der Meßempfindlichkeitsschwelle so eingestellt, daß zu Beginn der Messung eine geringe Meßempfindlichkeit, d.h. eine hohe Schwelle vorliegt, so daß lediglich die starken Signale von relativ nahe zum Meßsensor angeordneten Körpern empfangen werden, während die gleichzeitig eintreffenden schwächeren Signale der vorherigen Messung unterhalb der Empfindlichkeitsschwelle des Ultraschallempfängers liegen. Entsprechend der Abnahme der Schallintensität nimmt die Empfindlichkeit des Empfängers im zeitlichen Verlauf der Messung zu, so daß sie jederzeit ausreicht, die Signale der momentanen Messung zu erfassen, aber jederzeit zu gering ist, um die schwächer werdenden Signale der vorhergehenden Messung noch zu empfangen.

Diese laufzeitabhängige Detektionsempfindlichkeit erlaubt somit ein Eliminieren von Störsignalen aus vorhergehenden Messungen.

Vorzugsweise wird die Regelung in vier Zonen durchgeführt. Befindet sich der Läufer in der vordersten Zone ("Beschleunigungszone"), wird das Laufband beschleunigt. In der zweiten Zone ("Neutrale Zone") erfolgt keine Geschwindigkeitsveränderung. In der dritten Zone ("Verzögerungszone") wird das Laufband abgebremst. Der Regelungsalgorithmus unterscheidet sich nicht von der Beschleunigungszone. In der vierten Zone wirkt eine "Not-Aus"-Schaltung", die das Laufband mit hoher negativer Beschleunigung anhält, wenn der Läufer einen bestimmten Bereich verläßt und droht von der hinteren Bandkante hinuntergefahren zu werden.

Das Problem der Erfindung wird ferner durch ein Regelungssystem gelöst, bei dem die durch den Ultraschallempfänger detektierten Meßwerte zunächst mit einer Gruppe von vorgegebenen berechneten Erwartungswerten verglichen werden, wobei die vorgegebenen berechneten Erwartungswerte den Bereich derjenigen möglichen Meßwerte darstellen, die sich aus den Körpermaßen und der zu erwartenden Maximalbeschleunigung oder Abbremsung ergeben, und die ermittelten Meßwerte nur zur Regelung der Laufbandgeschwindigkeit weiter verarbeitet werden, wenn sie in diesem biologisch möglichen bzw. erwarteten Bereich liegen. Hierdurch wird eine Plausibilitätskontrolle der Meßwerte ermöglicht.

Vorzugsweise wird eine diskrete Regelung der Laufbandgeschwindigkeit aufgrund der ermittelten Meßwerte eingesetzt. Eine solche Regelung läßt sich beispielsweise mit der folgenden numerischen Gleichung durchführen, wobei der Ursprung des Koordinatensystems an dem Punkt liegt, an dem der Benutzer aus der neutralen Zone heraustritt:

$$a_{Laufband}(t_i)=K_1 \frac{x(t_{i-1})-x(t_{i-2})}{t_{i-1}-t_{i-2}} + q\frac{K_1^2}{8}(x(t_{i-1}) + x(t_{i-2}))$$

mit $q \leq 1 \wedge q \rightarrow 1 \wedge i \in N \backslash \{2\}$

Es empfiehlt sich die Zeitpunkte bei dieser symmetrischen Diskretisierungsgleichung äquidistant zu wählen. Dann gilt:

$$t_i = i\Delta t$$

mit $i \in N_0$

Dabei ergibt sich dann:

$$a_{Laufband}\,(i\Delta t) = K_1 \frac{x((i-1)\Delta t)-x((i-2)\Delta t)}{\Delta t} + q\,\frac{K_1^2}{8}\,(x((i-1)\Delta t)+x((i-2)\Delta t))$$

mit $q \leq 1 \wedge q \rightarrow 1 \wedge i \in N \backslash \{2\}$

Aus der Diskretisierung ergibt sich zwangsläufig eine Beschränkung für den Parameter $K_1$: Da auf der rechten Seite der Regelungsgleichung auf zwei Meßzyklen zurückgegriffen werden muß, um den aktuellen Wert von a zu bestimmen, gilt:

$$K_1 \leq \frac{1}{2\Delta t}$$

Mit den oben beschriebenen Maßnahmen zur Erhöhung der Wiederholungsrate lassen sich die Meßintervalle gegenüber dem Stande der Technik um den Faktor 8 verkleinern, was zu einer erheblichen Erhöhung der Feinfühligkeit der Laufbandregelung führt. Dadurch wird der Bereich für den Parameter $K_1$ um den Faktor 8 vergrößert. Vorzugsweise sind für $K_1$ Werte nahe des zulässigen Maximums $\frac{1}{2\Delta t}$ zu wählen:

$$a_{Laufband}\,(i\Delta t) = K_1 \frac{x((i-1)\Delta t)-x((i-2)\Delta t)}{\Delta t} + q\,\frac{K_1^2}{8}\,(x((i-1)\Delta t)+x((i-2)\Delta t))$$

mit $q \leq 1 \wedge q \rightarrow 1 \wedge K_1 \leq \frac{1}{2\Delta t} \wedge K_1 \rightarrow \frac{1}{2\Delta t} \wedge i \in N \backslash \{2\}$

Zur Erweiterung der erfindungsgemäßen Plausibilitätskontrolle kann die obige lineare Regelung zu einer nichtlinearen Regelung erweitert werden. Zur Überprüfung der Meßwerte auf ihre Plausibilität wird vorzugsweise auf biomechanische Daten von Läufern zurückgegriffen.

Die Nichtlinearität der Regelung hat dabei die Aufgabe, im Falle einer Fehlmessung der Position diese Fehlmessung durch eine Plausibilitätskontrolle abzufangen und die lineare Regelung für diesen Meßzyklus auszusetzen. Um eine leistungsfähige Plausibilitätskontrolle durchführen zu können, erweist es sich als zweckmäßig, auf biomechanische Daten von Läufern zurückzugreifen: Das Beschleunigungs-Zeit-Gesetz für einen aus der Anfangsgeschwindigkeit $v_0$ auf die Endgeschwindigkeit $v_e$ beschleunigenden Läufer auf einer ruhenden Laufbahn läßt sich durch nachstehende Modellgleichung beschreiben:

$$a_{Läufer}(t,\alpha,v_0,v_e) = \frac{\alpha^3(v_e - v_0)}{2} t^2 e^{-at}$$

Dabei ist $\alpha$ ein biomechanisches Parameter: $\alpha$ ist ein Maß für das asymptotische Abklingen des Beschleunigungsprozesses. Ein typisches Beschleunigungs-Zeit-Diagramm für einen Spitzensportler im Sprintbereich ($v_0$ = 7 m/s; $v_e$ = 10 m/s; $\alpha$ = 3$s^{-1}$) hat folgendes Aussehen:

## Diagramm

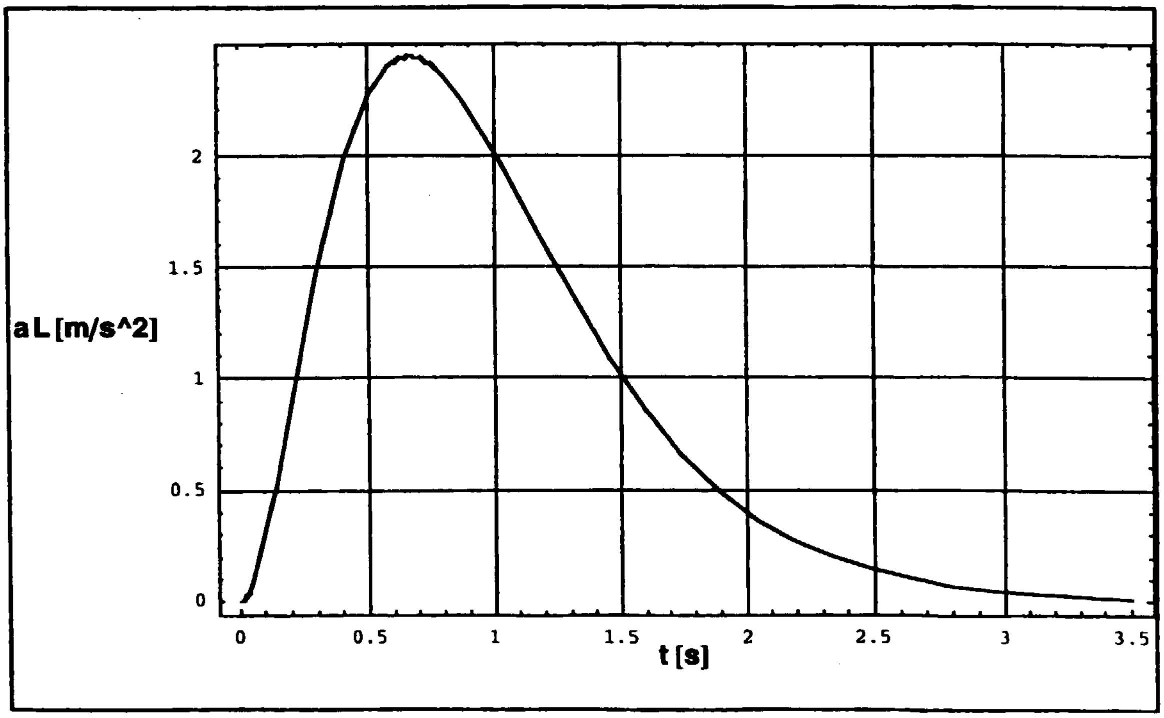


Die Modellgleichung für das zugehörige Geschwindigkeits-Zeit-Gesetz ergibt sich durch Integration der obigen Modellgleichung für das Beschleunigungs-Zeit-Gesetz. Man erhält:

$$v_{Läufer}(t,\alpha,v_0,v_e) = v_e-(v_e-v_0)(\frac{1}{2}\alpha^2 t^2 + \alpha t + 1)e^{-at}$$

Ein typisches Geschwindigkeits-Zeit-Diagramm für einen Spitzensportler im Sprintbereich ($v_0$ = 7 m/s; $v_e$ = 10 m/s; $\alpha$ = 3 $s^{-1}$) hat folgendes Aussehen:

## Diagramm

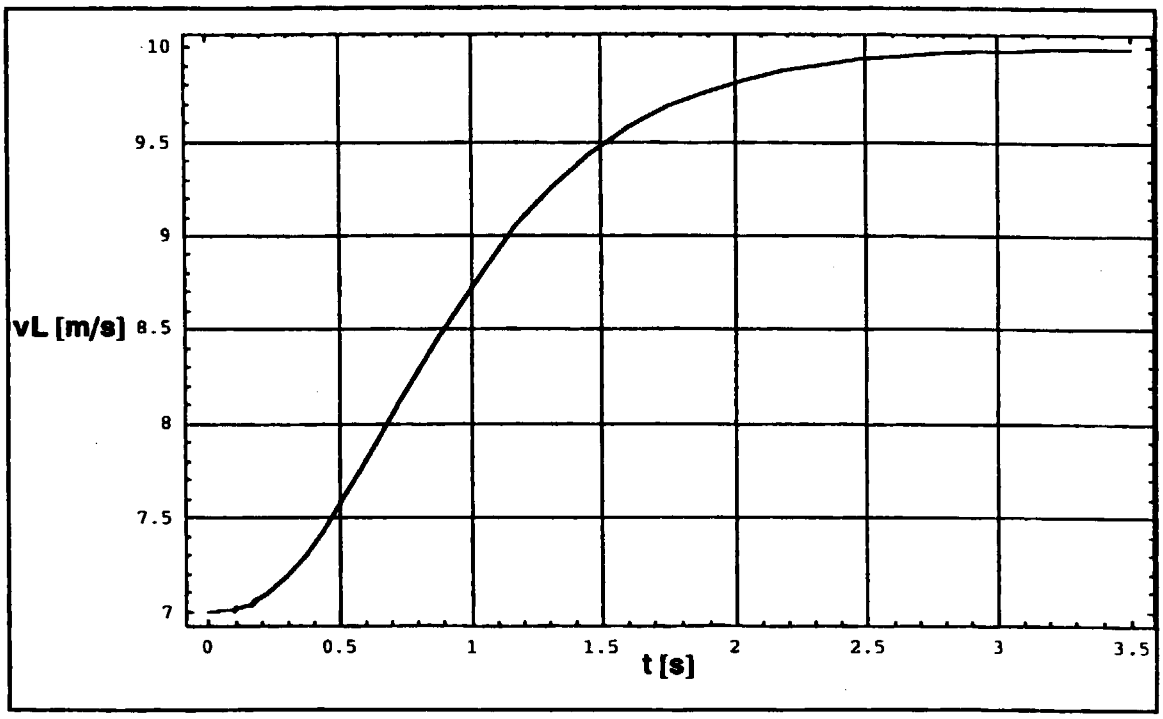


Die Modellgleichung für das zugehörige Weg-Zeit-Gesetz ergibt sich durch Integration der obigen Modellgleichung für das Geschwindigkeits-Zeit-Gesetz. Man erhält:

$$S_{Läufer}\ (t,\alpha,v_0,v_e,s_0)=s_0-\frac{3(v_e-v_0)}{\alpha}+v_e t+\frac{(v_e-v_0)}{\alpha}\left(\frac{1}{2}\alpha^2 t^2+2at+3\right)e^{-at}$$

Ein typisches Geschwindigkeits-Zeit-Diagramm für einen Spitzensportler im Sprintbereich ($v_0$ = 7 m/s; $v_g$ = 10 m/s; $\alpha$ = 3 $s^{-1}$; $s_0$ = 0 m) hat folgendes Aussehen:

## Diagramm

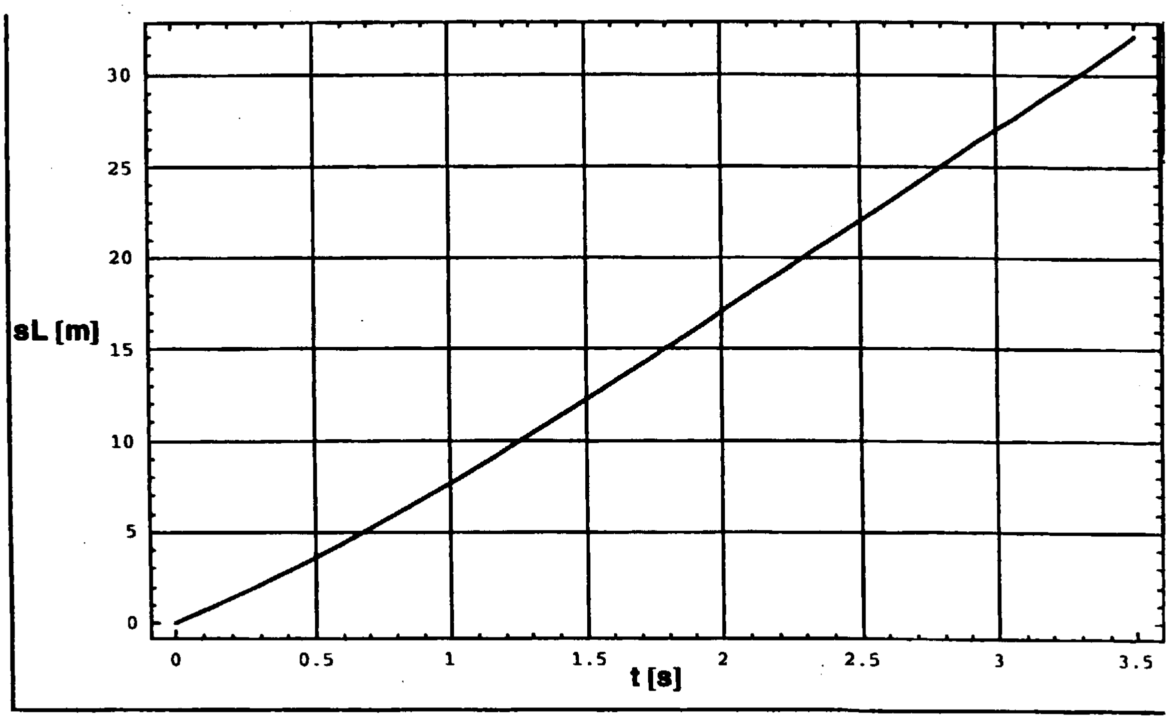


Ausgangspunkt für eine leistungsfähige Plausibilitätskontrolle im Rahmen einer nichtlinearen Regelung des Laufbandes ist die Modellgleichung für das Geschwindigkeits-Zeit-Gesetz. Da die obige Gleichung jedoch für einen aus der Ruhe beschleunigenden Läufer auf einer ruhenden Laufbahn gilt, muß sie vor einer Anwendung zur Regelung noch auf die entsprechende Gleichung für ein bewegtes Laufband transformiert werden. Bezeichnet man die Geschwindigkeit des Laufbandes mit $v_{\text{Laufband}}$, dann gilt für die Geschwindigkeit des Läufers im "Laborsystem" die nachstehende Gleichung:

$$\frac{dx(t)}{dt} = v_{\text{Läufer}}(t,\alpha,v_0,v_e) - v_{\text{Laufband}}(t)$$

Durch äquidistante Diskretisierung ergibt sich daraus:

$$\frac{x((i-1)\Delta t) - x((i-2)\Delta t)}{\Delta t} = v_{\text{Läufer}}((i-1)\Delta t,\alpha,v_0,v_e) - v_{\text{Laufband}}((i-1)\Delta t)$$

Wegen

$$v_{\text{Läufer}}((i-1)\Delta t,\alpha,v_0,v_e) = v_e-(v_e-v_0)\left(\frac{1}{2}\alpha^2(i-1)^2(\Delta t)^2 + \alpha(i-1)\Delta t + 1\right)e^{-\alpha(i-1)\Delta t}$$

erhält man als Erwartungswert für den Differenzenquotienten die Darstellung:

$$\frac{x((i-1)\Delta t)-x((i-2)\Delta t)}{\Delta t} = v_e-(v_e-v_0)\left(\frac{1}{2}\alpha^2(i-1)^2(\Delta t)^2 + \alpha(i-1)\Delta t + 1\right)e^{-\alpha(i-1)\Delta t} - v_{\text{Laufband}}((i-1)\Delta t)$$

Geht man davon aus, daß vor der spontanen Beschleunigung des Läufers die Regelung korrekt gearbeitet hat, dann gilt:

$$v_{Laufband}((i-1)\Delta t)=v_0$$

und man erhält für den Erwartungswert des Differenzenquotienten weiter:

$$\frac{x((i\text{-}1)\Delta t)\ \text{-}\ x((i\text{-}2)\Delta t)}{\Delta t}=(v_e\text{-}v_0)[1\text{-}(\frac{1}{2}\alpha^2(i\text{-}1)^2(\Delta t)+\alpha(i\text{-}1)\Delta t+1)e^{-\alpha(i-1)\Delta t}]$$

Bezeichnet man nun die Grenzgeschwindigkeit, die der betreffende Läufer maximal erreichen kann mit $v_{g9}$, dann gilt trivialerweise:

$$v_e \leq v_g$$

Damit kann man dann aber eine obere Schranke für den Erwartungswert des Differenzenquotienten angeben:

$$\frac{x((i-1)\Delta t)\ \text{-}\ x((i-2)\Delta t)}{\Delta t}\leq(v_g\text{-}v_0)[1\text{-}(\frac{1}{2}\alpha^2(i\text{-}1)^2(\Delta t)^2+\alpha(i-1)\Delta t+1)e^{-\alpha(i-1)\Delta t}]$$

Geht man davon aus, daß die Bremsbeschleunigungen beim Abbremsen betragsmäßig nicht höher sind als die positiven Beschleunigungen beim Antritt, dann gilt für den Erwartungswert des Differenzenquotienten weiter:

$$\frac{x((i-1)\Delta t)\ \text{-}\ x((i-2)\Delta t)}{\Delta t}\leq(v_g\text{-}v_0)[1\text{-}(\frac{1}{2}\alpha^2(i\text{-}1)^2(\Delta t)^2+\alpha(i\text{-}1)\Delta t+1)e^{-\alpha(i-1)\Delta t}]$$

Übersteigt nun der in der Regelungsgleichung vorkommende Term

$$\frac{x((i\text{-}1)\Delta t)\text{-}x((i\text{-}2)\Delta t)}{\Delta t}$$

betragsgemäß die oben angegebene Schranke für den Erwartungswert, dann liegt mit Sicherheit eine Fehlmessung bei der Positionsbestimmung vor. Die Regelung erfolgt aufgrund dieser Plausibilitätskontrolle dann nicht mehr linear nach der letzten in 2.2.2 angegebenen Gleichung. Stattdessen wird die Regelung für diesen Meßzyklus ausgesetzt oder der Stellwert durch einen plausiblen, extrapolierten Wert ersetzt.

Das erfindungsgemäße Laufgerät läßt sich mit beliebigen Meßsystemen betreiben, die auf der Basis einer Reflexion von Wellen arbeiten. So ist beispielsweise der Einsatz eines Radar- oder Infrarotmeßsystems mit der Erfindung denkbar.

Darüber hinaus ist das erfindungsgemäße Bandgerät geeignet, neben dem Einsatz bei Hochleistungssportlern oder im Rehabilitationsbereich auch für andere Sportarten eingesetzt zu werden, bei denen die Geschwindigkeit einer Unterlage in Abhängigkeit von der Position eines sich fortbewegenden Menschen geregelt werden soll, wie beispielsweise für Rollschuhfahrer oder für Schwimmer in Gegenstromanlagen.

Das Laufgerät läßt sich aber auch in der Tiermedizin beispielsweise zur Rehabilitation von verunglückten Sportpferden als auch in der Forschung zur Durchführung von Labortests mit Ratten oder Mäusen einsetzen. Allen Ausführungsbeispielen ist gemein, daß sich ein fortbewegungsfähiger Organismus sich auf einer die Bewegung neutralisierenden Unterlage fortbewegt und die Neutralisierung durch die Feinfühligkeit des erfindungsgemäßen Gerätes ein weitgehend nahe an der natürlichen Fortbewegungssituation angelehntes System ermöglicht.

In der Figur ist ein Laufband 1 mit einem Meßsystem 2 und einem Benutzer 3 dargestellt.

Die Regelung des Laufbandes wird in vier Zonen 4,5,6 und 7 durchgeführt. Befindet sich der Läufer in der vordersten Zone 4, wird das Laufband beschleunigt. In der zweiten Zone 5 läuft das Band mit konstanter Geschwindigkeit. In der dritten Zone 6 wird das Laufband 1 in dem Maße abgebremst, indem es zum Ausgleich der Änderung der Laufgeschwindigkeit des Benutzers erforderlich ist. Der Regelungsalgorithmus unterscheidet sich nicht von der Beschleunigungszone. In der vierten Zone 7 wirkt eine "Not-Aus"-Schaltung", die das Laufband mit hoher negativer Beschleunigung anhält, wenn der Läufer einen bestimmten Bereich verläßt und droht von der hinteren Bandkante hinuntergefahren zu werden.

In der Figur ist auch zu erkennen, wie die Arme und Beine des Läufers in der Schallkeule 8 ein frühes Reflexionsecho bewirken, welches nichts über die Torsoposition des Läufers aussagt.

**Patentansprüche**

1. Verfahren zum Betreiben eines Bewegungsgerätes mit einem Antrieb, einem Enffernungsmeßsystem und einem Regelungssystem für die Antriebsgeschwindigkeit, wobei das Enffernungsmeßsystem Sendesignale erzeugt und deren Reflexionssignale erfaßt, dadurch gekennzeichnet, daß die Reflexionssignale in einem vorgegebenen Erwartungsbereich ausgewertet und durch konsekutive Ausschließung einzelner Meßwerte anhand von Plausibilitätskriterien die Position des Benutzers ermittelt und die ermittelten Werte zur Regelung des Antriebs verwendet werden.

2. Verfahren nach Anspruch 1, dadurch gekennzeichnet, daß das erste detektierte Signal den Erwartungsbereich für die Benutzerposition eröffnet und der Erwartungsbereich sich aus der maximalen 1/2 Spannweite eines Benutzers ergibt.

3. Verfahren nach Anspruch 1 oder 2, dadurch gekennzeichnet, daß die maximal zu erwartende 1/2 Spannweite durch den Benutzer am Gerät eingestellt wird.

4. Verfahren nach einem der vorhergehenden Ansprüche, dadurch gekennzeichnet, daß die Benutzerposition durch Vergleich mehrerer Echofolgen ermittelt wird, indem die relativ zwischen den Einzelmessungen nicht koinzidierenden Signale herausgefiltert und die verbleibenden koinzidierenden Signale verwendet werden.

5. Verfahren zum Betrieb eines Bewegungsgerätes mit einem Antrieb, einem Enffernungsmeßsystem und einem Regelungssystem für die Antriebsgeschwindigkeit, wobei die Entfernung mit Hilfe von Schallwellen gemessen wird, dadurch gekennzeichnet, daß zwischen den Meßfolgen ein Frequenzwechsel stattfindet.

6. Verfahren nach einem der vorhergehenden Ansprüche, gekennzeichnet durch eine schmalbandige Meßfrequenz.

7. Verfahren nach einem der vorhergehenden Ansprüche, dadurch gekennzeichnet, daß die Meßfrequenz in einem vorgegebenen geräte-spezifischen Frequenzband liegt.

8. Verfahren nach einem der vorhergehenden Ansprüche, dadurch gekennzeichnet, daß als Enffernungsmeßsystem ein Ultraschallsystem eingesetzt wird.

9. Verfahren nach einem der Ansprüche 4 bis 8, dadurch gekennzeichnet, daß eine Mehrzahl von Bewegungsgeräten in unmittelbarer Nähe voneinander betrieben werden.

10. Verfahren nach einem der vorhergehenden Ansprüche, dadurch gekennzeichnet, daß die Schwelle der Signaldetektion des Enffernungsmeßsystems innerhalb eines Meßintervalls von einem höheren Anfangswert zu einem niedrigeren Endwert geändert wird.

11. Verfahren zum Betrieb eines Bewegungsgerätes mit einem Antrieb, einem Enffernungsmeßsystem und einem Regelungssystem für die Antriebsgeschwindigkeit, dadurch gekennzeichnet, daß die durch das Enffernungsmeßsystem ermittelten Meßsignale mit Erwartungswerten verglichen und beim Abweichen von den Erwartungswerten eliminiert bzw. herausgefiltert werden.

12. Verfahren nach Anspruch 11, dadurch gekennzeichnet, daß die Meßwertfilterung mit Ausrichtung auf meßtechnische Fehlsignale erfolgt.

13. Verfahren nach einem der Ansprüche 11 oder 12, dadurch gekennzeichnet, daß zur Ermittlung der Erwartungswerte physiologische Parameter des Benutzers herangezogen werden.

14. Verfahren nach einem der Ansprüche 11 bis 13, dadurch gekennzeichnet, daß zur Ermittlung der Erwartungswerte die geometrischen Werte des Bewegungsgerätes verwendet werden.

15. Verfahren zum Betrieb eines angetriebenen Laufgerätes mit einem Laufband, einem Enffernungsmeßsystem und einem Regelungssystem für die Laufbandgeschwindigkeit, dadurch gekennzeichnet, daß die Regelung der von dem Enffernungsmeßsystem detektierten Signale mit Hilfe der folgenden Gleichung erfolgt, wobei der Ursprung des Koordinatensystems in dem Punkt liegt, in dem der Benutzer aus der neutralen Zone heraustritt:

$$a_{Laufband}(t_i)=K_1 \frac{x(t_{i-1})-x(t_{i-2})}{t_{i-1}-t_{i-2}} + q\frac{K_1^2}{8}(x(t_{i-1}) + x(t_{i-2}))$$

mit $q \leq 1 \wedge q \rightarrow 1 \wedge i \in N \setminus \{2\}$

**16.** Verfahren nach Anspruch 14, dadurch gekennzeichnet, daß die Zeitpunkte $t_i$ äquidistant gewählt sind.

**17.** Verfahren nach Anspruch 15 oder 16, dadurch gekennzeichnet, daß der Parameter $K_1$ der Restriktion

$$K_1 \leq \frac{1}{2\Delta t}$$

genügt.

**18.** Verfahren nach Anspruch 15,16 oder 17, gekennzeichnet durch eine nichtlineare Plausibilitätskontrolle, bei der der Meßzyklus im Falle von fehlerhaften Meßwerten ausgesetzt oder durch einen extrapolierten Plausibilitätswert ersetzt wird.

**19.** Verfahren nach einem der vorhergehenden Ansprüche, dadurch gekennzeichnet, daß die Signalanalyse mit Hilfe der digitalen Datenverarbeitung erfolgt.

**20.** Bewegungsgerät mit einem Antrieb, einem Enffernungsmeßsystem und einem Regelungssystem für die Antriebsgeschwindigkeit, gekennzeichnet durch Verwendung eines Entfernungsmeßsystems, welches nach einem Verfahren gemäß einem der vorhergehenden Ansprüche betrieben wird.

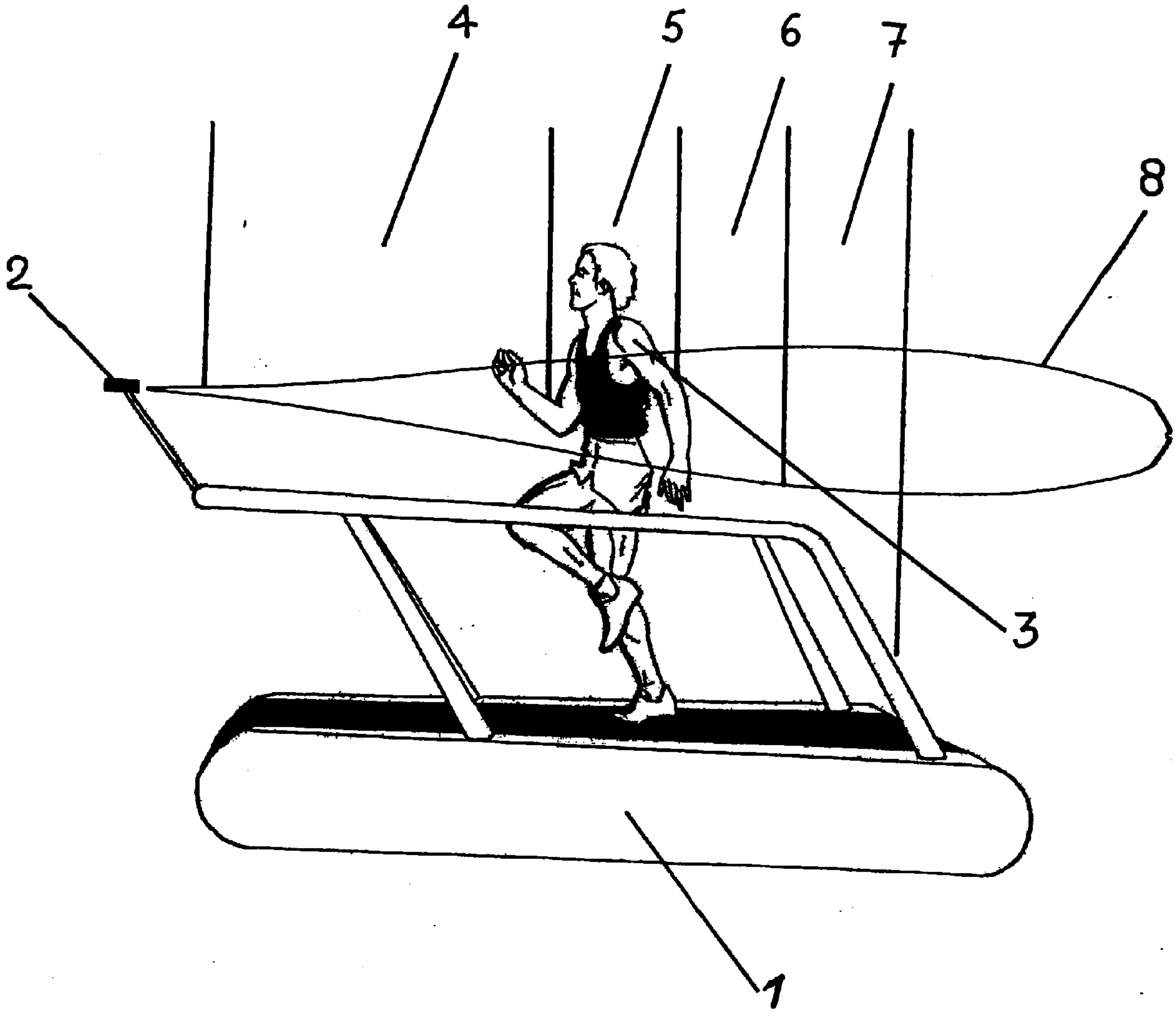


FIG 1